Europäisches Patentamt

European Patent Office

Office européen des brevets

(11) Publication number : **0 498 602 A2**

# EUROPEAN PATENT APPLICATION

(21) Application number : **92300906.2**

(22) Date of filing : **03.02.92**

(51) Int. Cl.$^5$ : **B29C 65/02, // B29K86:00**

(30) Priority : **06.02.91 JP 35033/91**
**22.03.91 JP 83589/91**

(43) Date of publication of application :
**12.08.92 Bulletin 92/33**

(84) Designated Contracting States :
**DE FR GB IT**

(71) Applicant : **NIPPON ZEON CO., LTD.**
**6-1, 2-chome, Marunouchi, Chiyoda-ku**
**Tokyo (JP)**

(72) Inventor : **Suzuki, Shoji**
**4135, Akuwacho, Seya-ku**
**Yokohama-shi, Kanagawa-ken (JP)**
Inventor : **Yanai, Koichi, c/o Nippon Zeon**
**Ohkurayama-ryo**
**873, Futoocho, Kohoku-ku**
**Yokohama-shi, Kanagawa-ken (JP)**
Inventor : **Okumura, Kin-ichi**
**801-6-143, Kamimachiya**
**Kamakura-shi, Kanagawa-ken (JP)**

(74) Representative : **Perry, Robert Edward**
**GILL JENNINGS & EVERY 53-64 Chancery**
**Lane**
**London WC2A 1HN (GB)**

(54) Composite molding and production process and use thereof.

(57)    Disclosed herein is a composite molding comprising a heating member formed of a thermoplastic polymer containing conductive particles therein and a base body made of a thermosetting polynorbornene resin having retention of shape at the melting point of the thermoplastic polymer. The heating member and base body are formed integrally with each other. The composite molding is optionally deformed from its original form memorized to a form easy to operate. A fusion-bonding layer composed of a thermoplastic polymer may be formed integrally or in close contact with the heating member. A production process and use of the composite molding are also disclosed.

EP 0 498 602 A2

## FIELD OF THE IVENTION

This invention relates to a composite molding having a heating member, and more specifically to a composite molding suitable for use in, for example, bonding, sealing or reinforcing articles molded or formed from thermoplastic polymers, and a production process and use thereof.

## BACKGROUND OF THE INVENTION

It is well known to use, as a for a joint or sealant (sealing compound) material for pipes made of an olefin polymer typified by polyethylene, a material capable of fusion-bonding to the olefin polymer, for example, the same polymer as or a polymer of a kind similar to that of the pipe and to fusion-bond them to each other by heat, thereby joining or sealing the pipes. An electro-fusion joint, which is a polymeric molding with a spirally wound heating wire embedded therein, has heretofore been known, in which an electric current is applied to the heating wire, thereby fusion-bonding the pipe joint to portions to be joined of pipes (Japanese Patent Application Laid-Open No. 206026/1989).

Howeyer, the electrofusion joint is expensive because of its complicated production process. In addition, the heating wire (in many cases, made of a metal such as a nichrome wire) embedded in plenty is required upon fusion bonding by heat. Howeyer, The wire is thereafter undesirable in view of a long run of use from the standpoint of the long-term stability of the joint adapted to various conditions for use when the joint is used with the wire embedded therein because it is a material corrodible, hard to bond to the polyolefin and highly rigid unlike the polymer (for example, the wire causes leakage of fluid from the interior).

As a pipe joint for joining polyethylene pipes, there has been proposed a joint in which a spiral heating member made of a metal is built in an inner surface of a cylindrical body, and the internal diameter of the cylindrical body is forcedly expanded upon the production of the pipe joint, thereby causing to retain a shape memory function in its diametrical direction (Japanese Patent Application Laid-Open No. 151688/1987). This pipe joint is deformed in its external shape upon overheating because it is made of a thermoplastic resin. Further, when the pipe joint is constricted by heat, it is susceptible to partial deformation, and the molten resin is also squeezed out to a great extent. In addition, since the heating member is arranged in the center of the inner surface of the pipe joint, the whole pipe joint can not be heated evenly, resulting in insufficient heat fusion bonding.

It has also been known to cover the surface of a molding made of a shape-memory resin with a synthetic resin, such as a polyurethane resin or polyacrylic resin, containing conductive particles therein so as to use the resulting synthetic resin coating as a heat source (Japanese Patent Application Laid-Open No. 239930/1990). Since this composite is however produced by a process in which the molding is coated with a liquid conductive resin by immersion or spraying, the process becomes complicated and it is impossible to form a thick heating layer. In addition, the practical resistivity of the heating layer is as high as 1-100 kΩ per unit of the molding and hence unsuitable for fusion-bonding the heating layer to portions to be joined.

On the other hand, it has been known that a thermosetting polynorbornene resin has excellent adhesion to olefin resins such as polyethylene and polypropylene, and a composite molding with both resins formed integrally with each other can hence be obtained (Japanese Patent Application Laid-Open No. 316262/1989). This publication discloses no composite moldings with any olefin resin containing conductive particles therein.

Further, there has been proposed a shape-memory composite molding comprising a base body made of a thermosetting polynorbornene resin and a surface layer composed of a polyolefin or thermoplastic elastomer (Japanese Patent Application Laid-Open No. 223443/1990). This composite molding is formed into an integral body by uniting the base body and surface layer to each other and is useful as a joint or a sealant. The composite molding is however accompanied by a problem that since external heating making use of a blaster, heat gun or the like is required to generate heat for recovery of shape, the heating takes a long time and the operation becomes complicated.

## OBJECTS AND SUMMARY OF THE INVENTION

An object of this invention is to provide a composite molding obtainable by a simple production process, high in safety and suitable for use as a bonding member, sealing member, reinforcing member or the like.

Another object of this invention is to provide a composite molding permitting fusion bonding by applying an electric current for a short period of time when used as a bonding member or the like and having good effectiveness in laying operation.

A further object of this invention is to provide a composite molding making it possible to select a fusion-bonding layer according to the material of members to be joined such as pipes made of a thermoplastic polymer.

A still further object of this invention is to provide a composite molding having shape-recovery property in addition to the excellent properties of the above-mentioned composite moldings.

The present inventors have carried out an extensive investigation with a view toward overcoming the problems involved in the above-mentioned prior art. As a result, it has been found that the above-described objects can be achieved by the provision of a composite molding comprising a heating member made of a thermoplastic polymer containing conductive particles therein and a base body formed of a thermosetting polynorbornene resin having retention of shape at the melting point of the thermoplastic polymer, said heating member and base body being formed integrally with each other.

This composite molding can be obtained with ease by reaction injection molding (RIM) in which a reaction stock solution comprising a norbornene monomer and a metathesis catalyst is cured in the presence of a heating member formed in advance in a mold. Besides, strong fusion bonding can be achieved by forming a fusion-bonding layer composed of a thermoplastic polymer integrally or in close contact with the heating member and squaring a material of the fusion-bonding layer with that of members to be joined, which are composed of a thermoplastic polymer. Further, since the fusion bonding to the members to be joined requires only to cover the joint of the members to be joined with the composite molding with the heating member without or with a fusion-bonding layer faced to the members and to apply an electric current to the heating member, the operation is easy. Furthermore, when the composite molding is deformed from its original form memorized to a form easy to operate, the mere application of an electric current to the heating body permits recovery of the composite molding to its original form and moreover heat fusion bonding of the heating member or the fusion-bonding layer to the members to be joined.

The composite moldings according to the present invention can have various shapes and hence used in a wide range of fields, for example, as sealing members, reinforcing members, etc. in addition to bonding members.

The present invention has been led to completion on the basis of these findings.

According to this invention, there is thus provided a composite molding comprising a heating member (A) formed of a thermoplastic polymer containing conductive particles therein and a base body (B) made of a thermosetting polynorbornene resin having retention of shape at the melting point of the thermoplastic polymer, said components (A) and (B) being formed integrally with each other, and said composite molding being optionally deformed from its original form memorized to a form easy to operate. A fusion-bonding layer (C) composed of a thermoplastic polymer may be further formed integrally or in close contact with the heating member (A) on the side opposite to the interface between the heating member (A) and the base body (B).

According to this invention, there is also provided a process for the production of a composite molding, which comprises enclosing a heating member (A) or a composite composed of the heating member (A) and a fusion-bonding layer (C) within a mold, feeding a reaction stock solution, which comprises a norbornene monomer and a metathesis catalyst, into a cavity of the mold, and then curing the reaction stock solution, thereby uniting the heating member (A) without or with the fusion-bonding layer (C) and a base body (B), which is composed of a thermosetting polynorbornene resin, into an integral body.

According to this invention, there is further provided a process for the use of the above-described composite molding, which comprises covering a predetermined portion of a formed or molded article (D) made of a thermoplastic polymer with the composite molding in such a manner that the heating member (A) or the fusion-bonding layer (C) comes into contact with the predetermined portion, and then applying an electric current to the heating member (A), thereby fusion-bonding the heating member (A) or the fusion-bonding layer (C) to the predetermined portion.

BRIEF DESCRIPTION OF THE DRAWINGS

FIGS. 1(a) and 1(b) are transverse and longitudinal sectional views, respectively, of an illustrative composite molding according to the present invention;

FIG. 2 is a sectional view of the composite molding shown in FIG. 1 when used as a bonding member for thermoplastic pipes;

FIGS. 3(a) and 3(b) are transverse and longitudinal sectional views, respectively, of another illustrative composite molding according to the present invention;

FIG. 4 is a sectional view of the composite molding shown in FIG. 3 when used as a bonding member for thermoplastic pipes;

FIGS. 5(a) and 5(b) are sectional and front views, respectively, of a further illustrative composite molding according to the present invention;

FIGS. 6(a) and (6b) sectional and front views, respectively, of the composite molding shown in FIG. 5 when fusion-bonded to polyethylene plates;

FIGS. 7(a) and 7(b) are transverse and longitudinal sectional views of an elbow (composite molding comprising a base body, a heating member and a fusion-bonding layer) according to the present invention;

FIG. 8 is a sectional view illustrating how to join ultra-high-molecular-weight polyethylene pipes by a pipe joint according to the present invention;

FIGS. 9(a) and 9(b) are transverse and longitudinal sectional views, respectively, of an illustrative shape-memory composite molding according to the present invention in a radially expanded state; and

FIGS. 10(a) and 10(b) are transverse and longitudinal sectional views, respectively, of another illustrative shape-memory composite molding according to the present invention in a radially expanded state.

## DETAILED DESCRIPTION OF THE INVENTION

Features of the present invention will hereinafter be described in detail.

[Base Body and Reaction Stock Solution]

A polymer forming a base body in composite moldings according to the present invention is a thermosetting polynorbornene resin.

A composite molding composed of a polynorbornene resin can be produced by reaction injection molding (RIM), resin transfer molding (RTM), reactive casting, liquid injection molding (LIM) or the like, in which at least two low-viscosity raw materials which react to each other to form a polymer quickly are mixed, and then fed into a mold to cure them in the mold.

For example, a molding of a polynorbornene resin can be obtained by using, a reaction stock solution, a reaction mixture containing an activator and a norbornene monomer, and another reaction mixture containing a metathesis catalyst and a norbornene monomer, mixing both reaction mixtures, feeding the resulting reaction stock solution into a mold and then subjecting it to bulk ring-opening polymerization. In the molding of the polynorbornene resin by RIM, a mold which is cheap and light in weight can be used because an injection pressure used is extremely low compared with that in the general injection molding of thermoplastic resins. In addition, RIM has a particular attraction for producing moldings of a large size or a intricate shape because the flowability of the raw materials in the mold is good.

As the polynorbornene resin forming the base body in this invention, any resins may be used so long as they have a norbornene ring. It is particularly preferred to use a resin formed by using a tricyclic or higher polycyclic norbornene monomer. The use of the monomer having a tricyclic or higher polycyclic structure permits the provision of a polymer high in glass transition temperature and heat distortion temperature and hence can satisfy the requirement of heat resistance for composite moldings. In this invention, a crosslinkable monomer is also used in a proportion of at least 10 wt.%, preferably at least 30 wt.% of the whole monomer in order to make the resulting polymer thermosetting.

As examples of the norbornene monomer, may be mentioned bicyclic compounds such as 2-norbornene and norbornadiene; tricyclic compounds such as dicyclopentadiene and dihydrodicyclopentadiene;

tetracyclic compounds such as tetracyclododecene; pentacyclic compounds such as tricyclopentadiene; heptacyclic compounds such as tetracyclopentadiene; alkyl-substituted products thereof (for example, methyl-, ethyl-, propyl- and butyl-substituted products); alkenyl-substituted products thereof (for example, vinyl-substituted products); alkylidene-substituted products thereof (for example, ethylidene-substituted product); aryl-substituted products (for example, phenyl-, tolyland naphthyl-substituted products); substitution products having a substituent such as an ester, ether or cyano group, or a halogen atom; and the like. Of these, tricyclic and pentacyclic norbornenes are preterably used from the viewpoint of easy availability, reactivity, heat resistance and the like.

The crosslinkable monomer is a polycylcic norbornene monomer having at least two reactive double bonds. As specific examples of the crosslinkable monomer, may be mentioned dicyclopentadiene, tricyclopentadiene and tetracyclopentadiene. Accordingly, when the norbornene monomer is identical with the crosslinkable monomer, it is unnecessary to use a particular crosslinkable monomer. These norbornene monomers may be used either singly or in combination.

Incidentally, a monocyclic cycloolefin such as cyclobutene, cyclopentene, cyclopentadiene, cyclooctene or cyclododecene, or the like, which can be subjected to ring-opening polymerization together with at least one norbornene monomer described above, may be used in combination within a range that it does not impede the objects of this invention.

Any catalysts may be used so long as they belong to the metathesis catalyst system known as a catalyst for the ring-opening polymerization of norbornene monomers. As specific examples of such a catalyst, may be mentioned metathesis catalysts such as halides, oxyhalides, oxides and organic ammonium salts of tungsten, molybdenum, tantalum, etc. Also, as specific examples of the activator (co-catalyst), may be mentioned alkyl aluminum halides, alkoxyalkyl aluminum halides, aryloxyakyl aluminum halides, organic tin compounds, etc.

The metathesis catalyst may be used in a range of, generally about 0.01-50 millimoles, preferably 0.1-10 millimoles per mole of the norbornene monomer. The activator may be used in a range of, generally 0.1-200, preferably 2-10 in terms of the molar ratio to the metathesis catalyst component.

Both metathesis catalyst and activator are preferably dissolved in the monomer before their use. However, they may be used in the form of a suspension or solution in a small amount of a solvent so long as it does not substantially impede the properties of the resulting polymer.

According to a preferred production process for the polynorbornene resin, a norbornene monomer is divided into two halves to place them in separate containers. A metathesis catalyst is added to one of the container, and an activator is added to the other, thereby preparing two stable reaction mixtures. These two reaction mixtures of different kinds are mixed and the resulting reaction stock solution is filled into a mold or frame (referred to as a mold collectively) having a predetermined shape to subject it to bulk ring-opening polymerization in the mold.

The temperature of the mold is generally 30°C or higher, preferably 40-200°C, particularly preferably 50-130°C. It is preferred that the components to be used in the polymerization reaction should be stored and operated in an inert atmosphere such as nitrogen gas.

The material of the mold may be any one of metal, resin, wood, plaster and the like.

The polynorbornene resin may optionally contain additives such as antioxidants, fillers, reinforcing materials, foaming agents, pigments, colorants and elastomers. These additives are generally incorporated by dissolving or dispersing them in the reaction stock solution.

When the base body is formed as a foamed article, a foaming agent is added to the reaction stock solution and this mixture is then filled into a mold. As preferred foaming agents, may be mentioned low-boiling organic compounds which are normally liquid and volatilize easily, for example, hydrocarbons such as pentane and hexane, halogenated hydrocarbons such as methylene chloride, trichlorofluoromethane and dichlorodifluoromethane, and the like; heat-expanding microcapsules containing any one of these low-boiling organic compounds therein; and inert gases such as nitrogen and argon.

[Heating Member]

Thermoplastic resin:

The thermoplastic polymer used as a matrix polymer for the heating member in this invention may be a polymer capable of forming an integral body with the thermosetting polynorbornene resin for the base body and being formed or molded in a predetermined shape even when conductive particles are added thereto.

As examples of such a polymer, may be mentioned olefin polymers comprising, as a main component, at least one olefin monomer, such as high-density polyethylene (PE), medium-density PE, low-density PE, ultra-high-molecular-weight PE, ethylene-propylene copolymers, ethylene-butene-1 copolymers, polypropylene (PP), polybutene-1, polypentene-1, poly(4-methylpentene-1), ethylene-propylene rubber (EPR), ethylene-propylene-diene terpolymers (EPDM), ethylene-vinyl acetate copolymer, ethylene-acrylicester copolymers and ethylene-vinyl chloride copolymers; halogenated vinyl polymers such as polyvinyl chloride (PVC); aromatic vinyl polymers such as polystyrene; chlorinated products of these polymers; and mixtures thereof.

As specific examples of mixtures, may be mentioned mixtures of high-density PE and low-density PE, mixtures of medium-density PE and low-density PE, mixtures of high-density PE and an ethylene-$\alpha$-olefin copolymer, mixtures of low-density PE and an ethylene-$\alpha$-olefin copolymer, etc.

As examples of additional polymers mixable with the above-mentioned polymers, may be mentioned hydrocarbon thermoplastic elastomers such as various kinds of block copolymers, which are formed from an aromatic vinyl compound typified by styrene and a conjugated diene such as isoprene or butadiene, specifically, block copolymers of S-I type (styrene-isoprene type), S-B type (styrene-butadiene type), S-I-S type (styrene-isoprene-styrene type), S-B-S type (styrene-butadiene-styrene type), S-I-S-I-S type (styrene-isoprene-styrene-isoprene-styrene type), etc., hydrogenated products thereof, and mixtures thereof; unvulcanized rubbers such as polybutadiene, polyisoprene, styrene-butadiene copolymers, chloroprene rubber and butyl rubber; and the like. These hydrocarbon thermoplastic elastomers or unvulcanized rubbers may be mixed and used in an optional proportion with the above-mentioned olefin polymers or the like.

Among these polymers, the olefin polymers, particularly, polyolefins formed by an olefin monomer alone are preferred from the viewpoint of adhesion to the base body, integrally-molding ability, fusion-bonding ability to members to be joined, etc.

Further, these thermoplastic polymers may be added with fillers such as titanium oxide, calcium carbonate, aluminum hydroxide and talc; colorants such as various kinds of pigments and dyes; antioxidants; ultraviolet absorbents; anti-fog additives; antistatic agents; and modifiers such as adhesion improvers composed of a petroleum resin or the like to color the polymer and/or improve their weather resistance.

Conductive particles:

As examples of the conductive particles contained in the thermoplastic polymer, carbon black, graphite particles, metal particles (powders of copper, iron, nickel and the like) and mixtures thereof.

The proportion of the conductive particles to be added may be suitably selected within a range that the heating member can be heated evenly by applying an electric current thereto. In general, it is however selected in such a manner that the volume resistivity of the heating member is at most $5 \times 10^2$ $\Omega \cdot$cm, preferably at most $1 \times 10^2$ $\Omega \cdot$cm at 25°C. The lower the volume resistivity, the easier the heat generation. In the case of Ketjen Black, which is excellent in electrical conductivity even among carbon blacks, by way of example, it may be contained in a proportion of, generally 5-35 wt.%, preferably 10-30 wt.% based on the thermoplastic resin.

Heating member:

The heating member is produced in the following manner. The thermoplastic polymer and conductive particles are first of all melted and kneaded in a Banbury mixer, a plastomill, mixing roll, pressure kneader or the like to form a sheet or ribbon, or pellets. The thus-formed product is then formed or molded in a desired form such as a pipe or sheet by extrusion, injection molding, blow molding, rotary molding, compression molding or the like.

It is preferred that the heating member useful in the practice of this invention has a volume resistivity of at most $5 \times 10^2$ $\Omega \cdot cm$ at 25°C. When the volume resistivity is too high, the heating member is heated uneven upon the application of an electric current, thereby causing inferior fusion bonding.

Fusion-bonding layer:

The heating member may be formed integrally or in close contact with a fusion-bonding layer composed of a thermoplastic polymer. The polymer forming the fusion-bonding layer must be able to fusion-bond to the heating member. In general, such a polymer is suitably selected from the above-mentioned thermoplastic polymers suitable for use in forming the heating member. The heating member is fusion-bonded to the fusion-bonding layer by heating upon use of the composite molding. Therefore, it is not always necessary to form them into an integral body in advance. When the heating member is formed integrally with the fusion-bonding layer, any conventional laminating processes, for example, heat fusion bonding and co-extrusion can be adopted. When the same or similar material as or to that of a formed or molded article, which is intended to fusion-bond for joining, sealing or the like, is used as a material for the fusion-bonding layer, strong fusion bonding can be achieved.

It may be difficult in some cases to form the heating member into an intricate shape (for example, elbow and cheese) because it contains a large amount of a filler. In such a case, an elbow (fusion-bonding layer) is made of a thermoplastic polymer by, for example, blow molding, and portions of the heating member are disposed between the base body and the fusion-bonding layer at portions necessitating heating to attach the heating member integrally or in close adhesion, thereby permitting the solution of such a problem.

Further, when high-purity water or a high-purity chemical product is intended to transfer, the direct contact of the heating member with such a fluid may be accompanied by a problem that the heating member contaminates the fluid, or may cause a phenomenon such that the heating member swells according to its material, so that no composite moldings having an exposed heating member may be used. For example, ultra-high-molecular-weight polyethylene is exclusively used in containers and pipes for gasoline because usual polyethylene tends to swell. Accordingly, it is effective to use ultra-high-molecular-weight polyethylene as a fusion-bonding layer in order to prevent a portion coming into contact with gasoline from swelling.

As described above, the provision of the fusion-bonding layer formed by a polymer containing no impurities and/or having a resistance to a contacting liquid can make offset the difference in material between members to be joined such as pipes and the heating member.

Composite molding:

The composite molding according to the present invention can be produced by a process wherein a heating member or a composite composed of the heating member and a fusion-bonding layer is enclosed within a mold, a reaction stock solution, which comprises a norbornene monomer and a metathesis catalyst, is fed into a cavity of the mold, and the reaction stock solution is then cured, thereby uniting the heating member without or with the fusion-bonding layer and a base body, which is composed of a thermosetting polynorbornene resin, into an integral body. Since the thermosetting polynorbornene resin has shape-recovering property, the composite molding may be deformed to a form easy to operate upon its use after the formation.

If the composite molding is a tubular composite molding, for example, a pipe joint or the like, it can be obtained as an integral composite molding composed of the heating member and the base body by using, as a core, a tubular heating member formed in advance, surrounding the heating member with a mold, and then feeding a reaction stock solution containing a norbornene monomer and a metathesis catalyst into a cavity defined between the inner surface of the mold and the outer peripheral surface of the heating member to subject it to bulk ring-opening polymerization. If the composite molding is a sheet-like composite molding on the other, it may be obtained by placing a heating member within a mold, feeding a reaction stock solution into the remaining spacing of the mold to subject it to bulk ring-opening polymerization. If the heating member has a fusion-bonding layer, it is arranged within a mold in such a manner that at least part of the heating member comes into contact with the reaction stock solution.

No particular limitation is imposed on the shape of the composite molding according to this invention. It may be suitably determined as necessary for the end application intended, for example, a pipe joint, bonding member for boards, sealing member, reinforcing member or the like.

The composite molding of this invention can be used as a joint member or sealing member for a tubular member such as a pipe, or reinforcing member by covering a predetermined portion of a formed or molded article made of a thermoplastic polymer with the composite molding in such a manner that the heating member or the fusion-bonding layer comes into contact with the predetermined portion, and then applying an electric current to the heating member, thereby fusion-bonding the heating member or the fusion-bonding layer to the predetermined portion.

For example, portions to be joined of two pipes made of an olefin polymer are inserted through the opening of a tubular composite molding provided with a heating member without or with fusion-bonding layer on its inner surface. An electric current is then applied to the heating member to fusion-bond the heating member or fusion-bonding layer to the joint by heat, thereby joining the pipes. In this case, when the heating member or fusion-bonding layer is formed by the same olefin polymer as the pipes, the outer peripheries of the pipes are also melted partially and strongly fusion-bonded to the heating member or fusion-bonding layer because they are identical in material. Even if the heating member and the fusion-bonding layer are not integrally formed, they are united into an integral body upon the application of the electric current.

Such a hollow composite may be radially expanded by applying external force at room temperature or with heating to deform it to a shape easy to operate upon pipe joining. After radially expanded, portions to be joined of two pipes are inserted in the opening of the composite, and an electric current is applied to the heating member to heat the composite to at least a heat deformation temperature of the thermosetting polynorbornene resin as a base body. As a result, the base body of the outer layer attempts to constrict to its original form memorized, thereby holding the joint of the pipes, and at the same time, the heating member fusion-bonds to the joint of the pipes. When a fusion-bonding layer is provided inside the heating member, it fusion-bonds to the pipes.

As described above, the good use of the shape-recovery property (shape-memory property) inherent in the thermosetting polynorbornene resin permits the improvement of workability upon application of the composite molding. Although the shape of an article to be fusion-bonded is generally plane when the shape-recovery property is used, it is not always limited thereto. Namely, it is possible to use the shape-recovery property for those having irregular surfaces such as a corrugated pipe so long as the base body can retain the shape of the article upon its recovery of shape.

As a means for applying an electric current, it is only necessary to provide electrodes for energizing on the heating member so as to permit connection of the heating member to a power source. As a material for the electrodes, it is preferable to use those having an electrical resistance lower than that of the heating member and good heat resistance, for example, an electrically conductive coating, electrically conductive paste, electrically conductive metal typified by copper, etc. Since a high contact resistance between the electrode and the heating member causes partial heating, it is preferable to widen their contact area by, for example, using a great number of copper wires in order to lower the contact resistance.

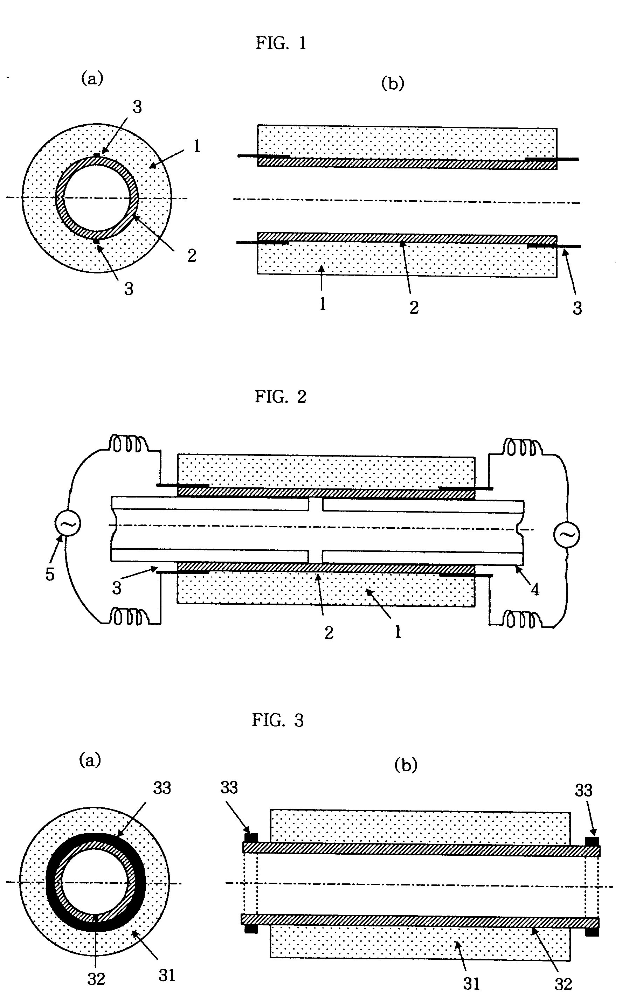

The electrodes for energizing may be disposed in such a manner that an electric current flows evenly to areas to be heated of the heating member. In the case of a tubular composite molding (pipe) by way of example, two linear electrodes are disposed on the outer peripheral surface of the heating member (interface with the base body) in parallel to the pipe at equal intervals to apply an electric current thereto (see FIGS. 1(a) and 1(b)]. Alternatively, linear electrodes are disposed at equal intervals by a multiple of 2 according to the diameter of the pipe and the resistance of the heating member to apply an electric current through positive and negative electrodes, which are separately collected by terminals. Alternatively, when the tubular composite molding is formed by making the heating member longer than the base body so as to protrude from both ends of the base body, ring-like electrodes can be arranged on both ends of the heating member (see FIG. 3). This method is easy to arrange the electrodes, so that the electrodes for energizing can be removably installed in situ. When the diameter of the pipe is large, and the shape is intricate like an elbow or cheese, a plurality of electrodes are arranged on portions to be heated of the heating member at equal intervals to apply an electric current through positive and negative electrodes.

The thermosetting polynorbornene resin of the base body must be able to retain its shape without fusing upon fusion of the heating member and/or fusion-bonding layer.

## ADVANTAGES OF THE INVENTION

According to the present invention, composite moldings high in safety and suitable for use as bonding members, sealing members, reinforcing members and the like can be provided. The composite moldings of this invention can be produced by a simple production process, permit fusion bonding by applying an electric current for a short period of time and have good effectiveness in laying operation. In addition, the composite moldings of this invention can be deformed from its original form memorized to a form easy to operate for their use making good use of the shape-recovery property inherent in the thermosetting polynorbornene resin.

EMBODIMENTS OF THE INVENTION

The present invention will hereinafter be described more specifically by the following examples. However, it should be borne in mind that this invention is not limited to these examples only. Incidentally, all designations of "part" or "parts" and "%" as will be used in the following examples mean part or parts by weight and wt.% unless expressly indicated.

Example 1:

In a Banbury mixer, 25% of conductive carbon black (Ketjen Black EC) was mixed with low-density polyethylene (melt index: 0.3, density: 0.92, melting point: 110°C). The mixture was formed into a sheet by a backing roll and then pelletized.

The thus-obtained pellets were extruded in the form of a pipe having an outer diameter of 36 mm and an inner diameter of 33 mm (thickness: 1.5 mm), and the pipe-like extrudate was cut into a piece 60 mm long to produce a heating member. Terminals of a resistance measuring device (ME-530 Model, manufactured by SOAR CORPORATION) were attached under pressure to surface of the heating member at intervals of 1 cm to measure the resistance between the terminals. This value was taken as a volume resistivity. As a result, the volume resistivity of the heating member was 53 $\Omega \cdot$cm.

As illustrated in FIG. 1(b), electrode terminals 3 made of copper were bonded to both ends of the heating member 2 to form a core for RIM. A cylindrical mold made of aluminum and having an inner diameter of 41 mm and an outer diameter of 80 mm was fixed around this core through top and bottom covers and then sealed. A gate for injecting a reaction stock solution in a cavity defined between the cylindrical mold and the core was provided in the top cover.

The whole cylindrical mold thus built up was heated to 60°C. After nitrogen gas was introduced through the gate to purge the cavity with the nitrogen gas, a reaction stock solution was injected.

The reaction stock solution used had the following composition. Namely, 75% of dicyclopentadiene (DCP) and 25% of a trimer of cyclopentadiene (mixture of about 20% of symmetrical trimer and about 80% of unsymmetrical trimer) were used as norbornene monomers, in which 5% of a styrene-isoprene-styrene block copolymer (Kraton 1170, product of Shell Company) and 2% of a phenolic antioxidant (Irganox 1010, product of Ciba-Geigy AG) were dissolved. The thus-obtained solution was charged in two containers.

To one container, diethyl aluminum chloride (DEAC), n-propanol and silicon tetrachloride were added so as to give molar concentrations of 40 millimoles, 44 millimoles and 20 millimoles, respectively, based on the monomers. To the other container, tri(tridecyl)ammonium molybdate was added so as to give a molar concentration of 10 millimoles. Both reaction mixtures were carried to a power mixer by a gear pump at a volume ratio of 1:1 and then injected into the cavity within the mold through the gate.

Polymerization reaction was completed upon elapsed time of about 3 minutes after the injection. The top and bottom covers of the cylindrical mold were removed to obtain a sleeve-like socket comprising the heating member 2 with the electrodes 3 attached thereto as an inner layer and a base body 1 composed of a thermosetting polynorbornene resin and formed integrally about the heating member [see FIGS. 1(a) and 1(b)]. Both outer and inner layers of this socket are excellent in adhesion property. When the peeling of both layers was attempted, it was impossible to peel them off from each other. Tg of the polynorbornene resin of the outer layer was found to be 170°C.

As illustrated in FIG. 2, two pipes 4 (outer diameter: 32.5 mm, thickness: 4 mm, length: 80 mm) made of the same low-density polyethylene as that used in the heating member were respectively inserted from both ends of the socket. When 30 V of an alternating voltage was applied for 5 minutes to each two electrode terminals 3 situated at both ends of the heating member 2 from power sources 5, the heating member 2 was fusion-bonded to the polyethylene on the surfaces of the pipes, and a part of the melt flowed out to edges of the socket as a bead.

The socket with the pipes joined therein was transversely out in six to prepare test samples. An end of each sample was held by a clamp of a tensile tester to subject it to a tensile test at a rate of 50 cm/min. As a result, all the samples were stretched and broken at portions corresponding to the pipe. However, the individual layers of the socket portion remained strongly bonded.

Example 2:

A tubular composite molding (socket) was produced in the same manner as in Example 1 except that a heating member 32 was formed so as to protrude by each 5 mm from both ends of a base body 31, and ring-like electrodes 33 made of copper were attached about both protrudent portions to derive terminals therefrom as shown in FIG. 3(b).

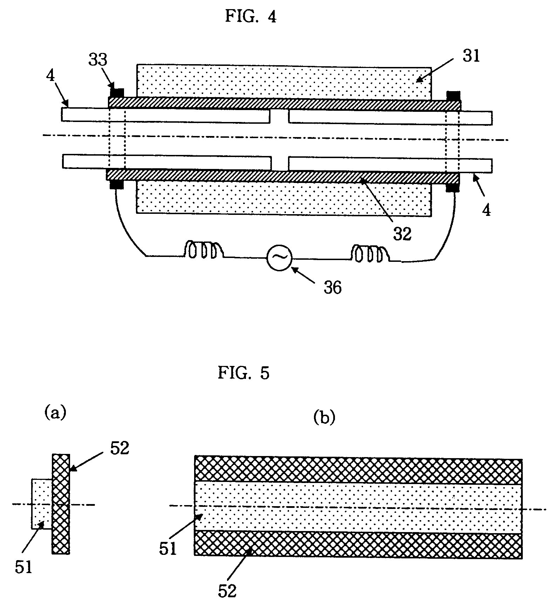

As illustrated in FIG. 4, the low-density polyethylene pipes 4 were respectively inserted from both ends of the socket in the same manner as in Example 1. When 40 V of an alternating voltage was applied for 2 minutes to the electrodes from a power source 36, the heating member 32 was fusion-bonded to the polyethylene on the surfaces of the pipes, and a part of the melt flowed out to edges of the socket as a bead. The ring-like electrodes were then cut off by a radio pliers. The thus-joined pipes were tested on bond strength in the same way a: in Example 1. As a result, all the samples were stretched and brocken at portions corresponding to the pipe. However, the individual layers of the socket portion remained strongly bonded.

Example 3:

A heating member (volume resistivity: 55 Ω·cm) was produced in the same manner as in Example 1 except that polybutene (polybutene-1, P1404C, product of Mitsui Yuka K.K., melt index: 0.4, melting point: 125°C) was used instead of the low-density polyethylene, and a socket was produced by reaction injection molding in the same manner as in Example 1.

Two pipes (outer diameter: 32.5 mm, length: 80 mm) made of the same polybutene as that used in the heating member were respectively inserted from both ends of the socket. When 30 V of an alternating voltage was applied for 2 minutes to each two electrode terminals situated at both ends of the heating member from the power sources 5, the heating member was fusion-bonded to the polybutene on the surfaces of the pipes, and a part of the melt flowed out to edges of the socket as a bead.

The thus-joined pipes were tested on bond strength in the same way as in Example 1. As a result, all the samples were stretched and broken at portions corresponding to the pipe. However, the individual layers of the socket portion remained strongly bonded.

Example 4:

The pellets composed of the mixture of low-density polyethylene and conductive carbon black, which had been prepared in Example 1, were charged in a mold for fabricating a sheet 1 mm thick, and compression-molded by pressing at 180°C, thereby producing a sheet-like heating member. A piece 10 cm long and 4 cm wide was cut out of this sheet and placed on a surface of a flat force (one of a split mold). The other force was then overlapped, and a cvyity defined between both forces was purged with nitrogen gas. After the mold was heated to 60°C, the same reaction stock solution as used in Example 1 was injected into the cavity within the mold, thereby producing a composite molding in which a base body 51 composed of the polynorbornene resin was formed integrally with the heating member 52 as shown in FIGS. 5(a) and 5(b).

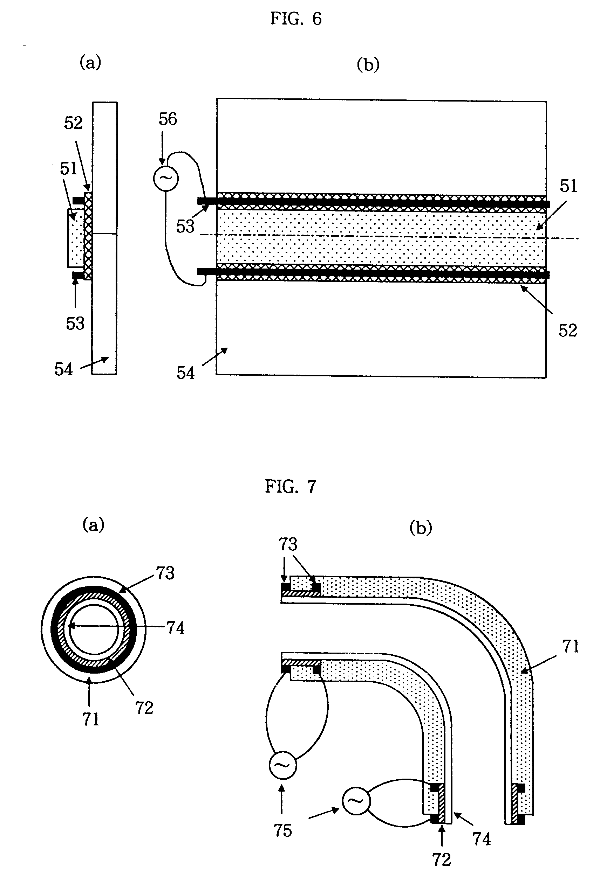

As illustrated in FIGS. 6(a) and 6(b), electrodes 53 made of copper were connected to protrudent portions of the heating member 52, and the composite molding was then placed on a joint between two polyethylene boards 54 which were the same material as the heating member. When 20 V of a voltage was applied for 40 seconds to the electrodes from a power source 56 under slight load, the heating member was fusion-bonded to portions of the polyethylene boards, which were brought into contact with the heating member.

When the thus-fusion-bonded composite molding in the form of a sheet was peeled off, the polyethylene sheet portion was broken.

Example 5:

An elbow joint suitable for use in polyethylene pipes for transferring high-purity chemicals was produced in the following manner.

Using, as a raw material, the same additive-free, low-density polyethylene as that used in the pipe, a fusion-bonding layer 74 (inner diameter: 36 mm, outer diameter: 39 mm) for the elbow as shown in FIG. 7(b) was produced by blow molding. Ring-like heating members 72 (inner diameter: 39 mm, thickness: 1.0 mm, length: 35 mm) made of the same material as that used in Example 1 were respectively fitted on the elbow at both opening ends thereof. A core was provided by attaching each pair of copper-made electrodes 73 for energizing to both sides of the heating members at equal intervals, connecting lead wires thereto, and fitting respective positive and negative terminals. The core was surrounded with an elbow type mold made of aluminum and having an inner diameter of 45 mm, and covers were fitted to both openings, thereby fixing the core.

In a similar manner to Example 1, the reaction stock solution was injected into a cavity defined between the mold and the core to polymerize the reaction stock solution, thereby producing a composite molding in the form of an elbow as shown in FIG. 7(b). A base body 71 was formed integrally with the heating members 72. The interface between the base body 71 and the fusion-bonding layer 74 was also defined integrally. However, the heating members 72 and the fusion-bonding layer 74 were not yet united into an integral body at this stage. When pipes made of low-density polyethylene were respectively inserted through both openings of the thus-formed elbow joint, and an electric current was caused to flow for 3 minutes at a voltage of 30 V through the respective electrode terminals from power sources 75, the elbow joint was fusion-bonded to the pipes. At this time, the heating members 72 and the fusion-bonding layer 74, and the fusion-bonding layer 74 and the pipes were respectively completely fusion-bonded to each other. Incidentally, when an electric current was applied to the elbow at the same conditions as described above before the insertion of the pipes, the heating members 72 were completely fusion-bonded to the fusion-bonding layer 74. This elbow joint can also be used as a joint.

Example 6:

A joint for ultra-high-molecular-weight polyethylene pipes having good gasoline resistance was produced in the following manner.

Ultra-high-molecular-weight polyethylene (Ace Polyethy HDC 4502, trade name; product of Showa Denko K.K) was extruded into a tubular body having an outer diameter of 25 mm, a thickness of 1 mm and a length of 40 mm to form a fusion-bonding layer. This fusion-bonding layer was covered with a sleeve having an inner diameter of 25 mm, a thickness of 1 mm and a length of 40 mm, which had been obtained by extruding a compound with 25% of conductive carbon black (Ketjen Black EC) mixed with a mixture of 50% of the above-described ultra-high-molecular-weight polyethylene and 50% of low-density polyethylene (Sumikasen F101, trade name; product of Sumitomo Chemical Co., Ltd.), thereby providing a core.

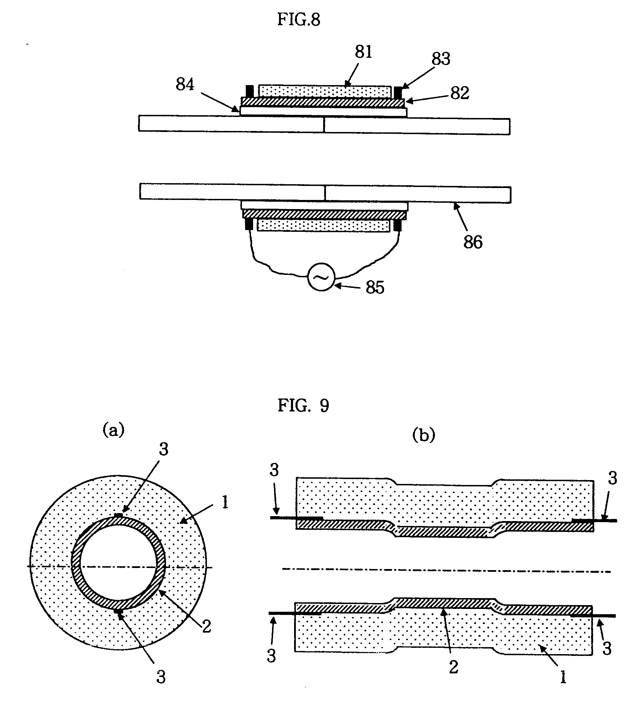

On the outside of this core, an aluminum-made mold for injecting and molding a reaction stock solution, which had a thickness of 2 mm, was fixed in such a manner that both ends of the sleeve protrude from the mold each by 5 mm to attach electrodes thereto. In a similar manner to Example 1, the reaction stock solution was injected into a cavity defined between the mold and the core to polymerize it, thereby producing a tubular composite molding as shown in FIG. 8. A base body 81 was formed integrally with a heating member 82. Pipes made of the above-described ultra-high-molecular-weight polyethylene 86 were respectively inserted through both openings of the thus-formed joint in such manner that the pipes come into contact with each other in the center of the joint. Removable ring-like electrodes 83 made of copper were fitted on the heating member at portions protrudent from the base body of the joint to connect terminals thereto. Thereafter, 30 V of an alternating current was then caused to flow for 3 minutes from a power source 85. As a result, the fusion-bonding layer 84 was fusion-bonded to the surfaces of the pipes 86. After cooling, the joint was transversely cut in four from the joined portion to subject it to a tensile test in the same manner as in Example 1. As a result, it was found that the joint exhibits sufficient strength, the base body, heating member, fusion-bonding layer and pipes are united into an integral body, and portions coming into contact with gasoline are all composed of the ultra-high-molecular-weight polyethylene.

Example 7:

In a Banbury mixer, 30% of conductive carbon black (Ketjen Black EC) was mixed with a mixture obtained by mixing low-density polyethylene (melt index: 2.0, density: 0.92) and an ethylene-α-olefin copolymer (melt index: 1.0, density: 0.87) at a weight ratio of 8:2. The resulting mixture was formed into a sheet by a backing roll and then pelletized.

The thus-obtained pellets were extruded in the form of a pipe having an outer diameter of 41 mm and an inner diameter of 35 mm through an extruder, thereby producing a heating member. Following the same reaction injection molding as that used in Example 1, the polynorbornene resin layer having a thickness of 3 mm was integrally formed on the outer periphery of the heating member, thereby producing a pipe having a two-layer structure. The thus-obtained pipe was cut into a piece 50 mm long. Flanged rings made of copper and having a width of 5 mm were respectively inserted under pressure inside openings at both ends of the cut pipe to bring it into contact under pressure with the heating member, thereby forming electrodes for energizing. Terminals were attached to parts of both electrodes, thereby providing a joint. Pipes made of medium-density PE and having an outer diameter of 34 mm and a thickness of 5 mm were respectively inserted through both openings of this joint in such manner that the pipes come into contact with each other in the center of the joint. An electric current was caused to flow, first, for about 30 seconds at an alternating voltage of 30 V, and then, for 200 seconds at a voltage lowered to 15 V through the terminals of the joint from a power source. The heating member, which was the inner layer of the joint, was fusion-bonded to the polyethylene pipes inserted through both openings of the joint.

Example 8:

The sleeve-like socket [see FIG. 1(b)] produced in Example 1 was radially expanded by heating it to 80°C, and inserting under pressure a round bar having an outer diameter of 35 mm and heated to 80°C in the opening of the socket to give an inner diameter of 35 mm. The thus-expanded composite molding is shown in FIGS. 9(a) and 9(b). Namely, as illustrated in FIGS. 9(a) and 9(b), this composite molding (expanded socket) has a heating member 2 formed on the inner peripheral surface of a base body 1 and at both ends thereof, is provided with electrode terminals 3 in the interface between the base body and the heating member.

Two pipes (outer diameter: 33.5 mm, thickness: 4 mm, length: 80 mm) made of crosslinked polyethylene and having an outer layer formed by applying and fusion-bonding the same low-density polyethylene as that used in the heating member were respectively inserted from both ends of the expanded socket. When 30 V of an alternating voltage was applied for 5 minutes to each two terminals 3 situated at both ends of the heating member 2, the base body was recovered to its original form and at the same time, the heating member 2 was fusion-bonded to the polyethylene on the surfaces of the pipes, and a part of the melt flowed out to edges of the socket as a bead.

The socket with the pipes joined therein was transversely cut in six to prepare test samples. An end of each sample was held by a clamp of a tensile tester to subject it to a tensile test at a rate of 50 cm/min. As a result, each sample was stretched and broken at a portion corresponding to the pipe. However, the individual layers of the socket portion remained strongly bonded.

Example 9:

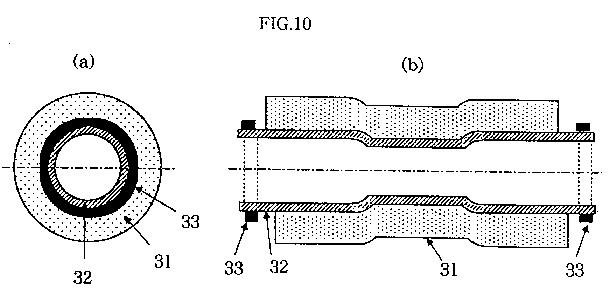

A socket produced in the same manner as in Example 2 was radially expanded by heating it to 80°C, and inserting under pressure a round bar having an outer diameter of 35 mm and heated to 80°C in the opening from both sides of the socket to have an inner diameter of 35 mm at both sides as illustrated in FIG. 10(b). Electrodes 33 made of copper were then attached about the heating member 32 at portions protrudent from the base body 31 to derive terminals therefrom.

In the same manner as in Example 8, pipes made of crosslinked polyethylene were respectively inserted from both ends of the socket. When 40 V of an alternating voltage was applied for 7 minutes to the electrodes, the base body 31 was recovered from the expanded form to its original form and at the same time, the heating member 32 was fusion-bonded to the polyethylene on the surfaces of the pipes, and a part of the melt flowed out to edges of the socket as a bead. The ring-like electrodes were then cut off by a radio pliers.

The thus-joined pipes were tested on bond strength in the same way as in Example 8. As a result, all the samples were stretched and broken at portions corresponding to the pipe. However, the individual layers of the socket portion remained strongly bonded.

Example 10:

The socket, which had the heating member made of polybutene and had been produced in Example 3, was radially expanded in the same manner as in Example 8.

Two pipes (outer diameter: 33.5 mm, length: 80 mm) made of the same polybutene as that used in the heating member were respectively inserted from both ends of the expanded socket. When an alternating voltage was applied for 5 minutes to the electrode terminals, the base body was recovered to its original form and at the same time, the heating member was fusion-bonded to the polybutene on the surfaces of the pipes, and a part of the melt flowed out to edges of the socket as a bead.

The thus-joined pipes were tested on bond strength in the same way as in Example 8. As a result, all the samples were stretched and broken at portions corresponding to the pipe. However, the individual layers of the socket portion remained strongly bonded.

## Claims

1. An integral composite moulding comprising a conductive member (2) formed of a thermoplastic polymer containing conductive particles, and a base body (1) made of a thermosetting polynorbornene resin that retains its shape at the melting point of the thermoplastic polymer.

2. The moulding of claim 1, which further comprises a layer of a thermoplastic polymer, formed integrally or in close contact with the conductive member on the side opposite to the interface between the conductive member and the base body.

3. The moulding of claim 1 or claim 2, wherein the conductive member has a volume resistivity of at most $5 \times 10^2$ $\Omega$.cm.

4. The moulding of any preceding claim, wherein the conductive member comprises at least 5 wt% of the conductive particles.

5. The moulding of any preceding claim, wherein the or each thermoplastic polymer is an olefin polymer, a halogenated vinyl polymer, an aromatic vinyl polymer, a chlorinated product of these polymers, a hydrocarbon thermoplastic elastomer, an unvulcanised rubber, or a mixture thereof.

6. The moulding of claim 5, wherein the thermoplastic polymer is an olefin polymer.

7. The moulding of claim 6, wherein the olefin has 2-5 carbon atoms.

8. The moulding of any preceding claim, wherein the conductive particles are carbon black.

9. The moulding of claim 8, wherein the carbon black is Ketjen Black.

10. The moulding of any preceding claim, in the form of a tube.

11. The moulding of any of claims 1 to 9, in the form of a sheet.

12. The composite moulding of any of claims 1 to 9, which is a joint.

13. The moulding of any preceding claim, which can be deformed, without loss of memory, to a form easy to work.

14. A process for the production of an integral composite moulding, which comprises enclosing a conductive member (2) and optionally also a thermoplastic layer within a mould having a cavity; introducing a solution comprising a norbornene monomer and a catalyst into the cavity; and curing the solution.

15. The process of claim 14, which further comprises deforming the resultant integral composite body to a form easy to work.

16. A method of bonding a thermoplastic polymer article to a moulding of any of claims 1 to 13, which comprises bringing a portion of the article into contact with the conductive member or, if present, the layer of thermoplastic polymer of the moulding, and applying an electric current to the conductive member.

17. The method of claim 16, which further comprises, before applying the electric current, deforming the moulding from its original form memorised to a form in which it is easy to recover the original form of the base body.

FIG. 1

(a)

(b)

FIG. 2

FIG. 3

(a)

(b)

FIG. 4

FIG. 5

(a)                                  (b)

FIG. 6

(a)

(b)

FIG. 7

(a)

(b)

FIG.8

FIG. 9

(a)

(b)

FIG.10

(a)

(b)

33

31

32

33

32

31

33